(19) Europäisches Patentamt
European Patent Office
Office européen des brevets

(11) Publication number: **0 064 746**
**B1**

(12) **EUROPEAN PATENT SPECIFICATION**

(45) Date of publication of patent specification: **19.08.87**

(51) Int. Cl.$^4$: **G 01 S 3/78**

(21) Application number: **82104000.3**

(22) Date of filing: **07.05.82**

(54) **Sunlight direction sensor.**

(30) Priority: **09.05.81 JP 69781/81**
**26.06.81 JP 99993/81**
**05.02.82 JP 17237/82**

(43) Date of publication of application:
**17.11.82 Bulletin 82/46**

(45) Publication of the grant of the patent:
**19.08.87 Bulletin 87/34**

(84) Designated Contracting States:
**CH DE FR GB IT LI SE**

(56) References cited:
**EP-A-0 050 189**
**GB-A-2 030 413**
**US-A-3 229 102**
**US-A-3 268 185**
**US-A-3 370 293**
**US-A-3 406 287**
**US-A-3 435 232**
**US-A-3 496 367**
**US-A-4 179 612**
**US-A-4 302 710**

(73) Proprietor: **Mori, Kei**
**3-16-3-501, Kaminoge**
**Setagaya-ku Tokyo (JP)**

(72) Inventor: **Mori, Kei**
**3-16-3-501, Kaminoge**
**Setagaya-ku Tokyo (JP)**

(74) Representative: **Schwabe, Hans-Georg, Dipl.-Ing. et al**
**Patentanwälte Schwabe, Sandmair, Marx**
**Stuntzstrasse 16**
**D-8000 München 80 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 064 746 B1

**Description**

The invention relates to a sunlight direction-sensing system comprising a hollow cylindrical body closed at one end so as to provide a base, a radially-inwardly extending non-transparent flange disposed at the other end of said cylindrical body to provide an aperture having a diameter smaller than the inner diameter of said cylindrical body, at least one pair of photosensors which are symmetrically arranged inside said cylindrical body on said base so that the inner edges of said pair of photosensors are aligned with the projections of the periphery of said aperture on the base, and means for determining the sunlight direction from a comparison of the output signals of the photosensors.

Various studies have recently been made to effectively utilize solar energy in various fields. Solar energy must be effectively collected to utilize it effectively. For this purpose, a solar energy collector device must follow the movement of the sun for optimal results.

Various sunlight direction sensors have been conventionally developed. However, they are not necessarily operated with high performance.

A sunlight direction-sensing system of the specified kind using two photosensors is known, for example, from US—A—3 406 287. Similar sunlight direction-sensing systems are described in US—A—3 370 293, US—A—3 496 367 and US—A—3 268 185.

Such a sunlight direction-sensing system, however, has the following disadvantages: The area of the aperture has to be adapted very exactly to the length of the housing and the position and the size of the photosensors since the direction of the sunlight is detected by determining the photosensor, "on which the sun is or has last impinged" (see line 60 of column 7 of US—A—3 406 287), i.e. this known sunlight direction-sensing system uses a "yes/no detector". The correspondingly required high precision may be possible with space-born vehicles as mentioned in lines 32 ff of column 1 of US—A—3 406 287, but usually not for general earthbound purposes, for example for private sun collectors.

If, furthermore, the detection of the sunlight direction is based upon the output signals of both photosensors, these two photosensors should have the same sensitivity or detection characteristic requiring very precise manufacturing methods.

Furthermore sunlight direction-sensing systems using more than two photosensors are known. This plurality of photosensors, however, is disposed in a very specific way, see for example, US—A—3 435 232 according to which the photosensors, namely the radiation-responsive elements, are arranged in cross shape (see Figure 1). A different configuration of four photosensors is shown in US—A—3 229 102 according to which a plurality of photosensors is used for detecting the direction of the sunlight, these photosensors being disposed in a specific (horizontal and vertical) angle with respect to the sun.

The additional photosensors used in the sunlight direction-sensing system according to US—A—4 179 612 influences the detection of the direction of the sunlight in so far as the bias voltage of the other photosensors is changed in dependence upon the output signals of said additional sensor "to obtain variations in voltage output which are inversely proportional of the radiation incident on the control photo cell", see the middle of column 4 of US—A—4 179 612. This additional photosensor does not take into account any variations in the sensitivities of the photo cells, but will only exclude any influence of changing incident light conditions as experienced during atmospheric changes due to clouds, dusts, haze etc.

GB—A—2 030 413 shows a photoelectric direction finding and luminous zone, such as the sun, tracking system comprising a platform angularly movable about mutually perpedicular axes and carrying a first set of photoelectric transducers to give coarse control of the platform position when the deviation of the direction of the sun from a norm is large, and a second set of photoelectric transducers to give a fine control when the deviation becomes small. A total of eight photoelectric transducers is required, giving a very complicated structure.

It is the object of the invention to provide a sunlight direction-sensing system of the specified kind enabling a very precise detection of the sunlight direction and automatic tracking of the sun.

In order to achieve the above object of the invention there is provided a sunlight direction sensing system of the specified kind characterized by the following features:

— a further photosensor is arranged on the outer surface of said non-transparent flange for detecting the total amount of incident sunbeams;
— said means are arranged to calculate the ratio α of the width of the area directly illuminated on either of the photosensors of each said photosensor pair to the overall width of said photosensors in accordance with the following relationship:

$$\alpha=(L_1-L_2)/(\lambda L_0-2L_2)$$

where

$L_0$= the output signal generated by said further photosensor in response to the total amount of sunbeams incident on said further photosensor;

$L_1$= the output signal generated by either of the photosensors of each said pair in response to the amount of impinging direct and indirect sunbeams,

$L_2$= the output signal generated by the other photosensor of each said pair in response

to the amount of impinging indirect sunbeams, and

λ= the ratio of the output signal $L_0$ from said further photosensor to the output signal $L_1$ from either of the photosensors of each said pair when sunbeams are incident on the entire surfaces of these photosensors.

Embodiments of the invention will now be described, by way of example only, with reference to the accompanying diagramatic drawings, in which:

Fig. 1 is a side-sectional view of an example of a sunlight direction-sensing system according to a preliminary "in-house" development of the applicant;

Fig. 2 is a sectional view taken along the line II—II in Fig. 1;

Fig. 3 is a circuit diagram of an electrical circuit using the sunlight direction-sensing system shown in Fig. 1,

Fig. 4 is a view for explaining the mode of operation of the sunlight direction-sensing system shown in Fig. 1,

Fig. 5 is a side-sectional view of a sunlight direction-sensing system, according to the present invention,

Fig. 1 shows the side-sectional view of a sunlight direction-sensing system according to an "in-house" development of the applicant. Fig. 2 is a sectional view taken along the line II—II in Fig. 1. A non-transparent upper flange 2 and a non-transparent lower flange 3 are formed at the top of a non-transparent cylindrical body 1 and at the bottom thereof. At least one pair of photosensors $4X_1$ and $4X_2$ or $4Y_1$ and $4Y_2$ are arranged at equal angular intervals on the upper surface of flange 3 in such a manner that photosensors $4X_1$ and $4X_2$ are symmetrical with respect to the axis of the cylindrical body 1.

The photosensors $4Y_1$ and $4Y_2$ are also symmetrical with respect to the axis. Distances between inner edges Xa and Xa and between inner edges Ya and Ya of the photosensors are the same as the inner diameter of the flange 2. The pairs of photosensors are preferably arranged perpendicularly to each other. When the axis of the cylindrical body 1 is parallel to sunbeams, they are not directly incident on the photosensors $4X_1$, $4X_2$, $4Y_1$ and $4Y_2$. Thus, the photosensors generate an output in accordance with indirectly incident sunbeams. However, when the sunbeams incident in a range of $\theta_1$ to $\theta_0$, that is, when the cylindrical body 1 inclined by an angle $\theta_{4x1}$ with respect to the direction of the incident sunbeams straight sunbeams are incident only on the photosensor $4X_1$ while they are not incident on the photosensor $4X_2$. However, when the sunbeams are incident in a range of $\theta_0$ to $\theta_2$, that is, when the cylindrical body 1 is inclined by an angle $\theta_{4x2}$ with respect to the direction of the incident sunbeams, direct sunbeams are incident only on the photosensor $4X_2$, while they are not incident on the photosensor $4X_1$. As shown in Fig. 3, outputs from the photosensors $4X_1$ and $4X_2$ are compared with each other in a differential amplifier 10X. If a motor 11X is driven to eliminate the difference, the solar energy collector device is rotated about a Y-axis (line connecting the photosensors $4Y_1$ and $4Y_2$) to be directed toward the sun, resulting in optimal conditions for collecting solar energy. If incident sunbeams deviate along the Y-axis, outputs from the photosensors $4Y_1$ and $4Y_2$ are compared with each other in a differential amplifier 10Y and a motor 11Y is driven to eliminate the difference. Therefore, the solar energy collector device is then pivoted about an X-axis (line connecting the photosensors $4X_1$ and $4X_2$) to be directed toward the sun.

A photosensor 5 is arranged on the upper surface of the flange 2 and detects the presence or absence of the sunbeams. Only when the photosensor 5 detects the presence of the sunbeams, the solar energy collector device follows the sun. However, when the sunbeams are not radiated, for example, at night, the solar energy collector device stops following the sun. Referring to Fig. 1, assume that the photosensor 5 is defined as a sensor for detecting the total amount of sunbeams, the sensor $4X_1$ is defined as a sensor for detecting the amount of direct beams from the sun (or a sensor for detecting the amount of indirect beams from the sun), the photosensor $4X_2$ is defined as a sensor for detecting the amount of indirect beams from the sun (or a sensor for detecting the amount of direct beams from the sun when the photosensor $4X_1$ is used as the sensor for detecting the amount of indirect beams from the sun). A total amount S (lux) of sunbeams, an amount D (lux) of direct beams from the sun, and an amount I (lux) of indirect beams from the sun have the following relation:

$$S=D+I \qquad (1)$$

When a ratio (D/I) of the amount of direct beams from the sun to the indirect beams from the sun is defined as β, the following relation is given:

$$S=\beta S+(1-\beta)S \qquad (2)$$

Further, assume that an output signal associated with the total amount S of sunbeams detected by the photosensor 5 is defined as $L_0$ (mV), an output signal associated with the amount D of beams detected by the photosensor $4X_1$ is defined as $L_1$ (mV), and that an output signal associated with the amount I of beams detected by the photosensor $4X_2$ is defined as $L_2$. One edge of the photosensor $4X_1$ or $4X_2$ which is in contact with the outer periphery of the luminous flux in the cylindrical body 1 is defined as 0 and the other edge thereof which is in contact with the inner periphery of the cylindrical body 1 is defined as 1. Further, the ratio of the width of the luminous flux fallen on the photosensor $4X_1$ to that of the photosensor $4X_1$ is defined as α. When the sunbeams are fallen in the range of $\theta_0$ to $\theta_1$, that is, when α is smaller than 1 and larger

than 0, one part of the photosensor $4X_1$ which corresponds to the ratio $\alpha$ is irradiated by the beams directly transmitted from the sun. The other part of the photosensor $4X_1$ which corresponds to the ratio $(1-\alpha)$ is irradiated by the beams indirectly transmitted from the sun. The photosensor $4X_2$ is only irradiated by the indirect beams from the sun.

Therefore,

$$L_1=\alpha\frac{1}{\delta}D+(1-\alpha)\frac{1}{\delta}I \qquad (3)$$

$$L_2=\frac{1}{\delta}I=\frac{1}{\delta}(1-\beta)S=(1-\beta)L_0 \qquad (4)$$

where

$\delta$ is a conversion coefficient $(S/L_0)$ and $\beta$ is the ratio (D/I). Relation (3) above may be rewritten as follows:

$$L_1=\frac{1}{\delta}\{\alpha D+(1-\alpha)I\}$$

$$=\frac{1}{\delta}\{\alpha\beta S+(1-\alpha)(1-\beta)S\}$$

$$=\frac{1}{\delta}(\alpha\beta S)+(1-\alpha)L_2$$

$$=(L_0)\alpha\beta+(1-\alpha)L_2$$

$$=\alpha\beta L_0+L_2-\alpha L_2$$

$$=\alpha(\beta L_0-L_2)+L_2$$

$$=\alpha(L_0-2L_2)+L_2$$

Therefore,

$$\alpha=\frac{L_1-L_2}{L_0-2L_2} \qquad (5)$$

As is apparent from relation (5), the ratio $\alpha$ is expressed by only the measurable values $L_0$, $L_1$ and $L_2$ and is independent of the ratio $\beta$ and the conversion coefficient $\delta$. If the sunbeams incident on the cylindrical body 1 are within an angular range corresponding to the ratio within the range of $0<\alpha<1$, the incident angle of the sunbeams is calculated by only the output signals from the photosensors 5, $4X_1$ and $4X_2$, as shown in relation (5). If values of the output signals in mV are substituted in relation (5), an angle by which the cylindrical body 1 is deviated from the sunbeams can be measured. Then, the cylindrical body 1 is rotated though the measured angle, preventing overhunting by a stepping motor effectively.

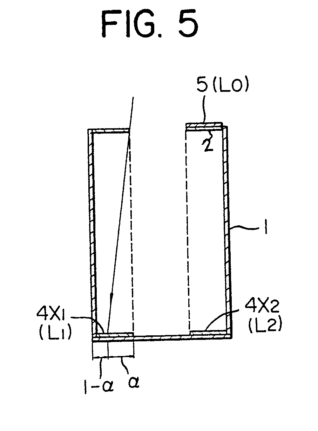

The present invention has been made to further improve the technique for calculation of the ratio $\alpha$ described above. According to the described method, sensitivity of the photosensor 5 (first photosensor) disposed on the flange 2 may differ from that of the photosensors $4X_1$ (second photosensor) and $4X_2$ (third photosensor) arranged on the flange 3. Further, the amount of sunbeams fallen on the photosensor on the flange 2 may differ from that of sunbeams fallen on the photosensors on the flange 3. More specifically, the amount of sunbeams incident on the photosensor 5 on the flange 2 is smaller than that of sunbeams incident on the photosensors $4X_1$ and $4X_2$. Therefore, the output signal from the photosensor 5 is smaller than that from the photosensor $4X_1$ or $4X_2$. The output signals from these photosensors do not satisfy relation (5). The present invention has been made to eliminate the drawback of the described method. Assume that sunbeams are fallen on the entire surface of the second or third sensor $4X_1$ or $4X_2$ and an output signal therefrom is defined as $L_1$ and the output signal from the first photosensor 5 is defined as $L_0$. Further, assume that a ratio $L_1/L_0$ is defined as $\lambda$, the total amount of sunbeams incident on the flange 2 is $S_0$, the amount of beams incident directly from the sun is defined as D, and the amount of beams incident indirectly from the sun is defined as I, the following relations are given in the conditions shown in Fig. 5:

$$\lambda S_0=D+I$$

$$\frac{D}{\delta}=\frac{\beta\lambda S_0}{\delta}=\beta\lambda L_0$$

$$\frac{I}{\delta}=(1-\beta)\lambda\frac{S_0}{\delta}=(1-\beta)\lambda L_0$$

And,

$$L_2=\frac{I}{\delta}=(1-\beta)\lambda L_0$$

Therefore,

$$\lambda L_0-L_2=\beta\lambda L_0$$

$$L_1=\frac{\alpha D}{\delta}+(1-\alpha)\frac{I}{\delta}$$

$$=\alpha\beta\lambda L_0+(1-\alpha)(1-\beta)\lambda L_0$$

$$=\alpha\beta\lambda L_0+(1-\alpha)L_2$$

$$=\alpha(\lambda L_0-L_2)+L_2-\alpha L_2$$

Therefore,

$$L_1-L_2=\alpha(\lambda L_0-2L_2)$$

$$\alpha=\frac{L_1-L_2}{\lambda_{L0}-2L_2}$$

If the ratio λ is determined in advance, the ratio α can be accurately determined.

Fig. 5 is a view of a sunlight direction sensor according to an embodiment of the present invention.

**Claim**

A sunlight direction-sensing system comprising

a) a hollow cylindrical body (1) closed at one end so as to provide a base,

b) a radially-inwardly extending non-transparent flange (2) disposed at the other end of said cylindrical body (1) to provide an aperture having a diameter smaller than the inner diameter of said cylindrical body (1),

c) at least one pair of photosensors (4X1, 4X2; 4Y1, 4Y2) which are symmetrically arranged inside said cylindrical body (1) on said base so that the inner edges of said pair of photosensors (4X1, 4X2; 4Y1, 4Y2) are aligned with the projections of the periphery of said aperture on the base, and

d) means for determining the sunlight direction from a comparison of the output signals of the photosensors (4X1, 4X2; 4Y1, 4Y2),

characterized by the following features:

e) a further photosensor (5) is arranged on the outer surface of said non-transparent flange (2) for detecting the total amount of incident sunbeams;

f) said means are arranged to calculate the ratio α of the width of the area directly illuminated on either of the photosensors of each said photosensor pair (4X1, 4X2; 4Y1, 4Y2) to the overall width of said photosensor in accordance with the following relationship:

$$\alpha=(L_1-L_2)/(\lambda L_0-2L_2)$$

where

$L_0$= the output signal generated by said further photosensor (5) in response to the total amount of sunbeams incident on said further photosensor;

$L_1$= the output signal generated by either of the photosensors of each said pair (4X1, 4X2; 4Y1, 4Y2) in response to the amount of impinging direct and indirect sunbeams,

$L_2$= the output signal generated by the other photosensor of each said pair (4X1, 4X2; 4Y1, 4Y2) in response to the amount of impinging indirect sunbeams, and

λ= the ratio of the output signal $L_1$ from either of the photosensors of each said pair (4X1, 4X2; 4Y1, 4Y2) to the output signal $L_0$ from said further photosensor (5) when sunbeams are incident on the entire surfaces of these photosensors.

**Patentanspruch**

Sonnenlicht-Richtungssensorsystem, enthaltend:

a) einen hohlen zylindrischen Körper (1), der an einem Ende verschlossen ist, um eine Basis auszubilden,

b) einen sich radial nach innen erstreckenden, nichttransparenten Flansch (2), der am anderen Ende des zylindrischen Körpers (1) angeordnet, um eine Öffnung mit einem Durchmesser auszubilden, der kleiner als der Innendurchmesser des genannten zyliddrischen Körpers (1) ist,

c) wenigstens ein Paar Fotosensoren (4X1, 4X2; 4Y1, 4Y2), die symmetrisch in dem zylindrischen Körper (1) auf der Basis derart angeordnet sind, daß die inneren Ränder des Paares Fotosensoren (4X1, 4X2; 4Y1, 4Y2) mit den Projektionen des Umfangs der genannten Öffnung auf die Basis ausgerichtet sind, und

d) Einrichtungen zur Ermittlung der Sonnenlichtrichtung aus einem Vergleich der Ausgangssignale der Fotosensoren (4X1, 4X2; 4Y1, 4Y2),

gekennzeichnet durch die folgenden Merkmale:

e) ein weiterer Fotosensor (5) ist auf der Außenfläche des genannten nicht-transparenten Flansches (2) angeordnet, um die Gesamtmenge einfallender Sonnenstrahlen zu ermitteln;

f) die genannten Einrichtungen sind dazu eingerichtet, daß Verhältnis α der Breite der auf einem der Fotosensoren eines jeden Fotosensorpaares (4X1, 4X2; 4Y1, 4Y2) direkt beleuchteten Fläche zu der Gesamtbreite des Fotosensors in Übereinstimmung mit folgenden Zusammenhang zu berechnen:

$$\alpha=(L_1-L_2)/(\lambda L_0-2L_2),$$

wobei

$L_0$= das Ausgangssignal, das von dem weiteren Fotosensor (5) in Abhängigkeit von der Gesamtmenge der auf den weiteren Fotosensor einfallenden Sonnenstrahlen erzeugt wird;

$L_1$= das Ausgangssignal, das von einem der Fotosensoren eines jeden Paares (4X1, 4X2; 4Y1, 4Y2) in Abhängigkeit von der Menge direkt und indirekt einfallenden Lichtstrahlen erzeugt wird;

$L_2$= das Ausgangssignal, das von dem anderen Fotosensor eines jeden Paares (4X1, 4X2; 4Y1, 4Y2) in Abhängigkeit von der Menge der indirekt einfallenden Lichstrahlen erzeugt wird, und

λ= das Verhältnis des Ausgangssignals $L_1$ von einem der Fotosensoren eines jeden Paares (4X1, 4X2; 4Y1, 4Y2) zu dem Ausgangssignal $L_0$ von dem genannten weiteren Fotosensor (5), wenn Sonnenstrahlen auf die Gesamtflächen dieser Fotosensoren einfallen.

**Revendication**

Un système de détection de la direction de la lumière solaire, comprenant:

a) un corps cylindrique creux (1) fermé à une extrémité de façon à former une base,

b) une couronne opaque (2) s'étendant radialement vers l'extérieur, disposée à l'autre extrémité du corps cylindrique (1), pour fomer une ouverture ayant un diamètre inférieur au diamètre intérieur du corps cylindrique (1),

c) au moins une paire de photocapteurs (4X1, 4X2; 4Y1, 4Y2) qui sont disposés symétriquement sur la base à l'intérieur du corps cylindrique (1), de façon que les bords intérieurs de la paire de photocapteurs (4X1, 4X2; 4Y1, 4Y2) soient alignés sur la base avec les projections de la périphérie de l'ouverture, et

d) des moyens destinés à déterminer la direction de la lumière solaire sur la base d'une comparaison des signaux de sortie des photocapteurs (4X1, 4X2; 4Y1, 4Y2)

caractérisé par les caractéristiques suivantes:

e) un photocapteur supplémentaire (5) est placé sur la surface extérieure de la couronne opaque (2) pour détecter l'éclairement total correspondant aux rayons solaires incidents;

f) les moyens précités sont conçus de façon à calculer le rapport α entre la largeur de la zone directement éclairée sur l'un ou l'autre des photocapteurs de chaque paire de photocapteurs (4X1, 4X2; 4Y1, 4Y2), et la largeur totale de ce photocapteur, conformément à la relation suivante:

$$\alpha=(L_1-L_2)/(\lambda L_0-2L_2)$$

dans laquelle

$L_0$= le signal de sortie que génère le photocapteur supplémentaire (5) sous l'effet de l'éclairement total correspondant aux rayons solaires qui tombent sur la photocapteur supplémentaire;

$L_1$= le signal de sortie que génère l'un ou l'autre des photocapteurs de chaque paire (4X1, 4X2; 4Y1, 4Y2) sous l'effet de l'éclairement correspondant aux rayons solaires directs et indirects reçus,

$L_2$= le signal de sortie que génère l'autre photocapteur de chaque paire (4X1, 4X2; 4Y1, 4Y2) sous l'effet de l'éclairement correspondant aux rayons solaires indirects reçus et

$\lambda$= le rapport entre signal de sortie $L_1$ de l'un ou l'autre des photocapteurs de chaque paire (4X1, 4X2; 4Y1, 4Y2), et le signal de sortie $L_0$ du photocapteur supplémentaire (5), lorsque des rayons solaires tombent sur la totalité des surfaces de ces photocapteurs.

FIG. 1

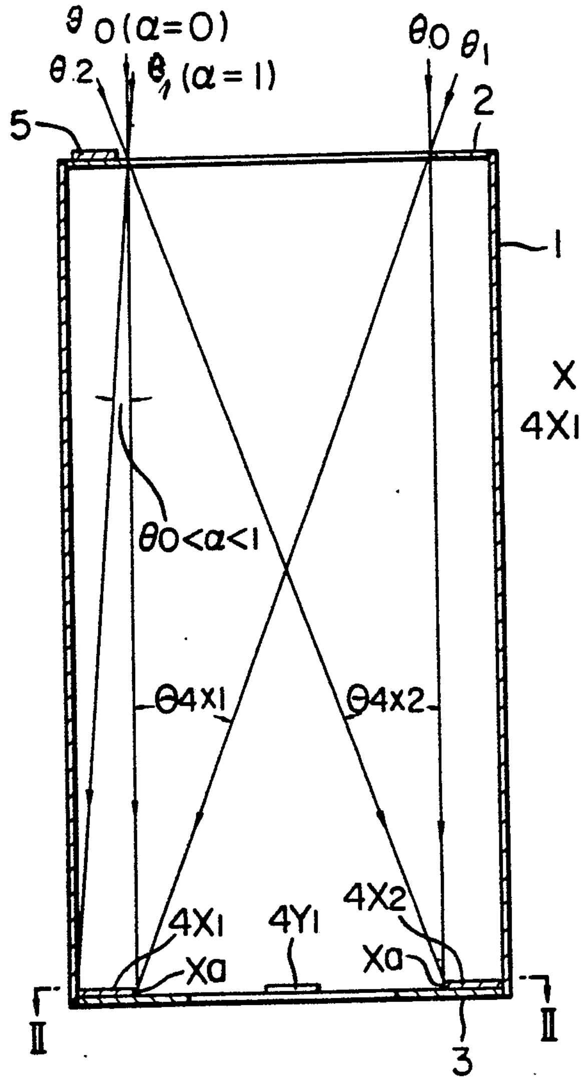


FIG. 2

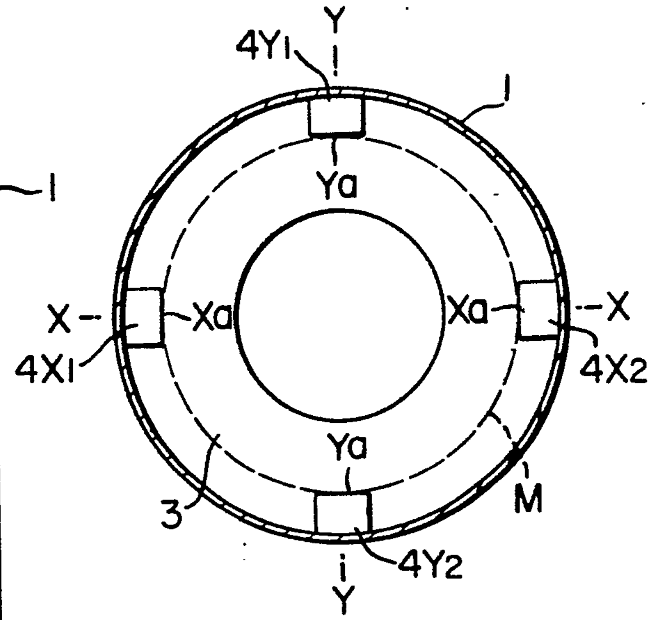


FIG. 3

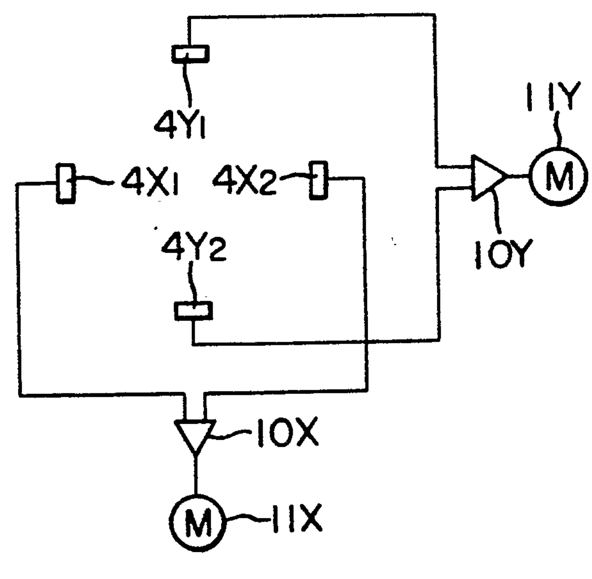


FIG. 4

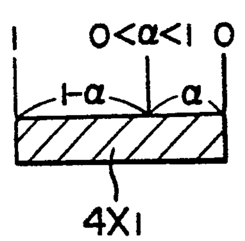

FIG. 5